(19) Europäisches Patentamt
European Patent Office
Office européen des brevets

(11) **EP 0 908 056 B1**

(12) **EUROPÄISCHE PATENTSCHRIFT**

(45) Veröffentlichungstag und Bekanntmachung des Hinweises auf die Patenterteilung:
**18.08.2004 Patentblatt 2004/34**

(21) Anmeldenummer: **97930319.5**

(22) Anmeldetag: **13.06.1997**

(51) Int Cl.⁷: $H04N\ 7/30$

(86) Internationale Anmeldenummer:
**PCT/DE1997/001209**

(87) Internationale Veröffentlichungsnummer:
**WO 1997/050254 (31.12.1997 Gazette 1997/57)**

(54) **VERFAHREN UND VORRICHTUNG ZUR BEARBEITUNG VON BILDPUNKTEN EINES BILDSEGMENTS DURCH EINEN RECHNER**

COMPUTER-ASSISTED PROCESS AND DEVICE FOR PROCESSING THE IMAGE POINTS OF AN IMAGE SEGMENT

PROCEDE ET DISPOSITIF POUR LE TRAITEMENT PAR ORDINATEUR DES POINTS D'IMAGE D'UN SEGMENT D'IMAGE

(84) Benannte Vertragsstaaten:
**DE FR GB IT**

(30) Priorität: **25.06.1996 DE 19625402**

(43) Veröffentlichungstag der Anmeldung:
**14.04.1999 Patentblatt 1999/15**

(73) Patentinhaber: **SIEMENS AKTIENGESELLSCHAFT**
**80333 München (DE)**

(72) Erfinder: **KAUP, André**
**D-85636 Höhenkirchen-Siegertsbrunn (DE)**

(56) Entgegenhaltungen:
**EP-A- 0 649 258**

- **YANBIN YU ET AL: "PICTORIAL TRANSFORM CODING FOR TESSELLATING ARBITRARY SHAPED REGIONS" SIGNAL PROCESSING THEORIES AND APPLICATIONS, BARCELONA, SEPT. 18 - 21, 1990, Bd. 2, TORRES L;MASGRAU E; LAGUNAS M A, Seiten 901-904, XP000365734**
- **SANEI S ET AL: "ADAPTING TRANSFORM CODING TO TEXTURALLY SEGMENTED IMAGES" PROCEEDINGS OF THE ASILOMAR CONFERENCE ON SIGNALS, SYSTEMS AND COMPUTERS, PACIFIC GROVE, NOV. 4 - 6, 1991, Bd. 2 OF 2, CHEN R R, Seiten 1205-1209, XP000314537**
- **ANDR KAUP, TIL AACH: "Segment-Oriented Coding of Textured Images Based on Successive Approximation" INTERNATIONAL SYMPOSIUM ON SPEECH, IMAGE PROCESSING AND NEURAL NETWORKS, 13. - 16.April 1994, HONG KONG, Seiten 197-200, XP002043359**

**Beschreibung**

Die Codierung von Videosignalen entsprechend beispielsweise den Bildcodierungs-Standards H.261, H.263, MPEG1 sowie MPEG2, basiert häufig auf einer blockorientierten diskreten Cosinustransformation (DCT). Diese blockorientierten Bildcodierungsverfahren eignen sich jedoch nicht mehr für Bildcodierungsverfahren, die nicht auf rechteckigen Blöcken basieren, sondern in denen beispielsweise Objekte aus einem Bild segmentiert werden und die Segmente des Bildes codiert werden. Diese Verfahren werden als regionenbasierte oder objektbasierte Bildcodierungsverfahren bezeichnet. Dabei erfolgt eine Segmentierung von in digital vorliegenden Bildern entsprechend der in der Szene vorkommenden Objekte. Es wird eine separate Codierung dieser segmentierten Objekte anstelle der Codierung von Bildblöcken wie bei blockbasierten Bildcodierungsverfahren durchgeführt. Dabei erfolgt üblicherweise die Codierung durch Modellierung der segmentierten Objekte und anschließende Übertragung der Modellierungsparameter dieser segmentierten Objekte.

Nach der Übertragung der Bildinformation von einem Sender zu einem Empfänger werden die einzelnen Objekte des Bildes im Empfänger anhand der übertragenen Modellierungsparameter wieder rekonstruiert.

Eine Möglichkeit zur Modellierung der Objekte besteht in einer Reihenentwicklung der Bildfunktion nach einer Menge von geeignet gewählten Basisfunktionen. Die Modellierungsparameter entsprechen dann den Entwicklungskoeffizienten dieser Bildfunktion. Eine solche Modellierung des Bildes ist Grundlage der Transformationscodierung. Sollen einzelne, beliebig berandete Objekte des Bildes codiert werden, ist eine Transformation für Segmente mit beliebiger, in der Regel nicht konvexer Berandung erforderlich.

Für eine solche Transformation existieren bisher zwei grundsätzliche Ansätze.

In dem Verfahren, welches in dem Dokument [1] beschrieben wird, wird das gegebene Bildsegment zunächst in ein umschreibendes Rechteck kleinstmöglichen Ausmaßes eingebettet. Zu diesem Recckteck kann eine diskrete Cosinus-Transformation (DCT) angegeben werden, die vollständig durch die Basisfunktionen der Transformation spezifiziert ist. Um diese Transformation an die Segmentform anzupassen, werden die auf dem Rechteck definierten Basisfunktionen nacheinander bezüglich der Form des Segmentes orthogonalisiert. Die resultierenden orthogonalen, formabhängigen Basisfunktionen bilden dann die gesuchte segmentangepaßte Transformation.

Ein Nachteil dieses Lösungsansatzes ist darin zu sehen, daß ein hoher Bedarf an Rechenleistung und an Speicherplatz zur Durchführung dieses Verfahrens gegeben ist. Ferner weist dieses bekannte Verfahren den Nachteil auf, daß über die Eignung der resultierenden Transformation zur Datenkompression keine sicheren Aussagen getroffen werden können, da die Transformation wesentlich von der Orthogonalisierungsreihenfolge, und damit von der speziellen Implementierung des Verfahrens, abhängt.

In dem Dokument [2] ist ein Verfahren beschrieben, bei dem das gegebene Bildsegment getrennt nach Zeilen und Spalten transformiert wird. Dazu werden zunächst alle Zeilen des Bildsegments links ausgerichtet und nacheinander einer eindimensionalen horizontalen Transformation unterzogen, deren Transformationslänge jeweils der Zahl der Bildpunkte in der entsprechenden Zeile entspricht. Die resultierenden Koeffizienten werden anschließend ein weiteres Mal in vertikaler Richtung transformiert.

Dieses Verfahren birgt insbesondere den Nachteil in sich, daß die Korrelationen der Helligkeitswerte der Bildpunkte (Ähnlichkeiten der Bildpunkte) aufgrund der Umsortierung der Bildpunkte nicht vollständig ausgenutzt werden können.

Zur Verbesserung dieses aus dem Dokument [2] bekannten Verfahrens wird in dem Dokument [3] ein Verfahren beschrieben, bei dem eine für ein einfaches Bildmodell angepasste Transformation für konvexe Bildsegmentformen durchgeführt wird. Hierbei sind allerdings nur solche Bildsegmentformen zugelassen, die beim Durchlaufen von Zeilen oder Spalten keine Unterbrechungen (Löcher) aufweisen.

Die oben beschriebenen, bekannten Verfahren weisen weiterhin den Nachteil auf, daß wegen der variablen Transformationslänge Standardtransformationsverfahren bzw. Standardbausteine für die Durchführung der Transformation nicht mehr eingesetzt werden können.

Ferner ist es aus dem Dokument [4] bekannt, allen Bildpunkten eines Bildsegments quadratischer Form mit 8x8 Bildpunkten, die nicht zu einem ersten Bildsegment gehören, welches mindestens zu einem Teil in dem Bildsegment quadratischer Form enthalten ist, einen vorgegebenen festen Helligkeitswert zuzuordnen.

Dieses Verfahren weist vor allem zwei Nachteile auf.

Erstens ist es in dem Grenzbereich des ersten Bildsegments und dem Bildsegment quadratischer Form möglich, daß Sprungstellen des Signalverlaufs der Helligkeitswerte zwischen Bildpunkten auftreten, womit hochfrequente Spektralanteile verursacht werden, was zu einem unerwünschten und unnötigen erhöhten Codierungsaufwand und damit Bedarf an Übertragungskapazität führt.

Zweitens ist dieses Verfahren auf blockbasierte Verfahren mit Bildsegmenten beschränkt, die eine quadratische Form aufweisen.

Dadurch, daß die Standardbildtransformationsverfahren nicht mehr angewendet werden können, entstehen bei den aus [1], [2], [3] bekannten Verfahren erhebliche Kosten für Codierungseinheiten, welche die bekannten, oben beschriebenen Verfahren verwenden.

Standardbildtransformationsverfahren sind aus [5] bekannt.

Aus [6] ist eine Einrichtung zur Codierung von Bildsignalen bekannt, mit der eine Signalextrapolation eines Signalverlaufs von einem ersten Bildbereich in einen zweiten Bildbereich erfolgt. Die Signalextrapolation erfolgt durch Spiegelung des Signalverlaufs an d der Kante des ersten Bildbereichs.

In [7]sind verschiedene Möglichkeiten einer Signalextrapolation aufgezeigt, eine periodische Fortsetzung, eine symmetrische Fortsetzung sowie eine wertkonstante Fortsetzung des Signalverlaufs.

Allen aus [6] und [7] bekannten Verfahren liegt ein Nachteil zugrunde, daß bei einer Spektraltransformation auf das gesamte Signal, welches sich aus dem Signalverlauf und dem extrapolierten Sgnalverlauf ergibt, eine unerwünscht hohe Anzahl hoher Spektralanteile ergibt und somit viele Spektralkoeffizienten im höheren Spektralbereich entstehen, die zusätzlich codiert und übertragen werden müssen.

Aus [8] ist ein adaptives Bildcodierungsverfahren bekannt, das zuerst auf der Basis eines Homogenitätskriteriums ein Bild in Regionen segmentiert und dann eine Transformationscodierung anwendet, um den Inhalt dieser Regionen zu codieren, wobei die Form dieser Regionen frei wählbar ist.

Somit liegt der Erfindung das Problem zugrunde, ein Verfahren zur Bearbeitung von Bildpunkten eines Bildsegments beliebiger Form anzugeben, das als Ergebnis Bildseqemente einer Bildsegmentzielform aufweist, wobei in den Bildsegmenten der Bildsegmentzielform der Signalverlauf der Helligkeitswerte und/oder der Farbwerte zum einen in dem Bereich, der nicht in dem ursprünglichen Bildsegment liegt einen glatten Verlauf aufweist und zum anderen in einem Grenzbereich zwischen dem ursprünglichen Bildsegment und dem Bereich, der nicht in dem ursprünglichen Bildsegment liegt, möglichst keine Sprungstellen in dem Signalverlauf aufweist.

Das Problem wird durch das Verfahren gemäß Patentanspruch 1 und eine Vorrichtung gemäß Patentanspruch 21 gelöst.

Bei dem Verfahren werden den Bildpunkten eines ersten Bildsegments ein Helligkeitswert und/oder ein Farbwert zugeordnet, wobei das erste Bildsegment eine beliebige Form aufweisen kann. Die Helligkeitswerte und/oder Farbwerte werden auf Bildpunkte eines zweiten Bildsegments ebenfalls beliebiger Form extrapoliert. Bei der Extrapolation wird darauf geachtet, daß der Signalverlauf der Helligkeitswerte und/oder der Farbwerte der Bildpunkte in dem zweiten Bildsegment geglättet wird. Weiterhin wird die Extrapolation in einer Weise durchgeführt, daß in einem Übergangsbereich von Bildpunkten des ersten Bildsegments und Bildpunkten des zweiten Bildsegments möglichst keine Sprungstellen im Signalverlauf der Helligkeitswerte und/oder Farbwerte auftreten.Dies bedeutet, daß der Grenzbereich zwischen dem ersten Bildsegment und dem zweiten Bildsegment bei der Extrapolation ebenfalls geglättet wird.

Durch das Verfahren wird es möglich, den Signalverlauf von Helligkeitswerten und/oder Farbwerten von Bildpunkten eines ersten Bildsegments auf Bildpunkte eines zweiten Bildsegments zu extrapolieren, wobei hohe Ortsfrequenzen in den Signalverläufen und damit hohe Spektralanteile und somit Spektralkoeffizienten für höhere Frequenzen möglichst vermieden werden. Dies führt zu einer Einsparung von üblicherweise zu quantisierenden, zu codierenden und zu übertragenden Spektralkoeffizienten. Somit wird eine erhebliche Einsparung bei der Quantisierung, Codierung und Übertragung von Spektralkoeffizienten bei der Bildcodierung erreicht.

Vorteilhafte Weiterbildungen der Erfindung ergeben sich aus den abhängigen Ansprüchen.

Es ist vorteilhaft, zur Extrapolation des Signalverlaufs ein digitales Filter mit einer glättenden Charakteristik zu verwenden, um die Anforderungen der Glättung des Signalverlaufs zu gewährleisten. Bei dieser Weiterbildung des Verfahrens wird die Extrapolation des Signalverlaufs vollständig im Ortsbereich durchgeführt.

Ferner ist es vorteilhaft, als digitales Filter ein lokales Mittelwert-Filter zu verwenden, da mit dem Mittelwert-Filter eine optimale Extrapolation bezüglich der Glättungskriterien erreicht wird.

Weiterhin ist es vorteilhaft, zu Beginn des Verfahrens die Helligkeitswerte und/oder Farbwerte der Bildpunkte des zweiten Bildsegments mit einem Wert zu initialisieren, beispielsweise mit dem Mittelwert der Helligkeitswerte und/oder der Farbwerte der Bildpunkte des ersten Bildsegments. Auf diese Weise wird das Ergebnis des Verfahrens weiter verbessert.

Desweiteren ist es vorteilhaft, das Vefahren in mehreren Iterationen durchzuführen, wodurch die Glättungseigenschaften weiter verbessert werden.

Das Verfahren muß jedoch nicht notwendigerweise ausschließlich im Ortsbereich durchgeführt werden, es ist ebenso eine Variante vorgesehen, bei der eine erste Funktion gebildet wird, welche sich mindestens aus einem ersten Term und einem zweiten Term zusammensetzt, mit denen zum einen das Kriterium der Originaltreue des ersten Bildsegments und zum anderen die Glattheitskriterien bei der Extrapolation der Helligkeitswerte und/oder der Farbwerte gewährleistet wird.

Ferner ist es in einer Weiterbildung des Verfahrens vorteilhaft, ausgehend von einer allgemein angenommenen Funktion, welche den ergänzten Signalverlauf in dem zweiten Bildsegment beschreibt, in dem Verfahren diese Funktion in den Spektralbereich zu transformieren, die transformierte Funktion in die erste Funktion einzusetzen und die erste Funktion zu minimieren. Das daraus entstehende lineare Gleichungssystem wird nach den Spektralkoeffizienten aufgelöst, und die entsprechenden Spektralkoeffizieten werden quantisiert, codiert und übertragen.

Bei der Weiterbildung des Verfahrens, in dem Ganzzahl-Arithmetik verwendet wird, wird eine erhebliche Einsparung an Rechenzeit und an Hardwareaufwand zur Durchführung des Verfahrens erreicht.

Ferner ist es vorteilhaft, daß das erste Bildsegment und das zweite Bildsegment zusammen eine quadratische Form aufweisen. Dies führt dazu, daß standardisierte, blockbasierte Bildcodierungsverfahren, beispielsweise die DCT, und die dafür vorhandenen, optimierten Hardwarebausteine bzw. Softwarerealisierungen verwendet werden können. Dies bedeutet, daß im Rahmen dieses Verfahrens für beliebige erste Bildsegmente nach Durchführung dieses Verfahrens Standardbausteine zur blockbasierten Transformationcodierung eingesetzt werden können. Dies führt zu einer erheblichen Kosteneinsparung auch bei der sog. objektbasierten Bildcodierung.

In den Figuren sind zwei Ausführungsbeispiele des erfindungsgemäßen Verfahrens dargestellt, welche im weiteren näher erläutert werden.

Es zeigen

Fig. 1          eine Skizze, in der ein Bild mit einzelnen Bildpunkten und einem ersten Bildsegment und einem zweiten Bildsegment beispielhaft dargestellt ist;

Fig. 2          ein Ablaufdiagramm, in dem die einzelnen Verfahrensschritte des Verfahrens dargestellt sind;

Fig. 3          ein Ablaufdiagramm, in dem die einzelnen Verfahrensschritte eines ersten Ausführungsbeispiels des Verfahrens dargestellt sind;

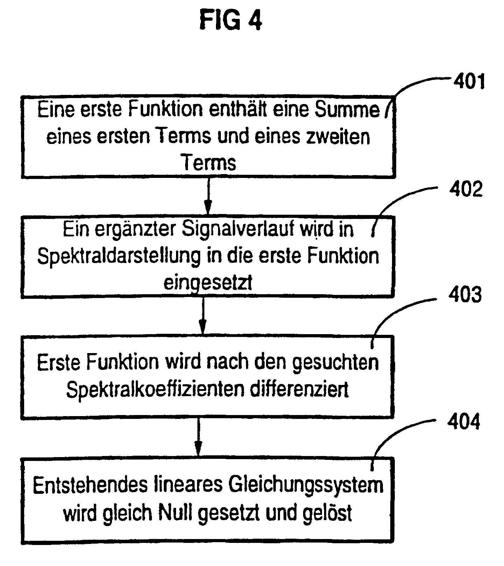

Fig. 4          ein Ablaufdiagramm, in dem die einzelnen Verfahrensschritte eines zweiten Ausführungsbeispiels des Verfahrens dargestellt sind;

Fig. 5a bis 5c   Bildpunkte und deren zugehörige Helligkeitswerte bzw. Farbwerte des Bildsegments vor und nach erfolgter Extrapolation;

Fig. 6          eine Anordnung mit einer Kamera, zwei Rechnern und zwei Bildschirmen, mit der beispielsweise das Verfahren durchgeführt wird;

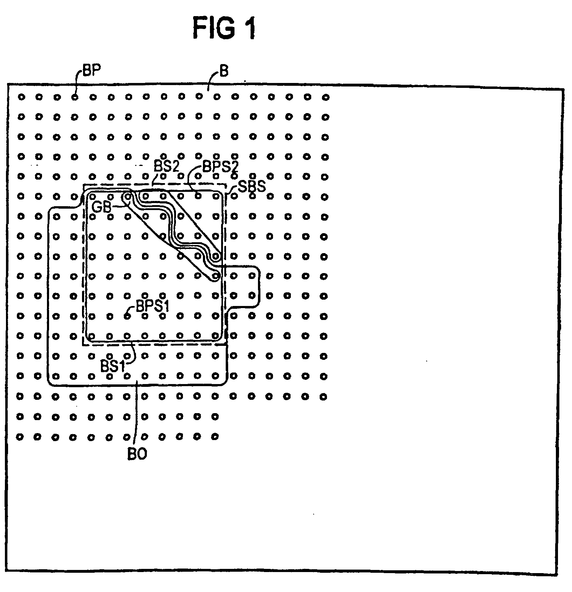

In Fig. 1 ist ein digitales Bild B mit einer beliebigen Anzahl Bildpunkten BP dargestellt. Bei den sog. objektbasierten Bildcodierungsverfahren werden die Bildpunkte BP eines Bildes B in Bildobjekte BO gemäß ihrer Semantik segmentiert. Bei objektbasierten Bildcodierungsverfahren kann es vorteilhaft oder sogar erforderlich sein, mindestens einen Teil des Bildobjektes BO gemeinsam mit Bildpunkten BP, die nicht zu dem Bildobjekt BO gehören, zu codieren und zu übertragen. Ein solcher Beispielsfall ist in Fig. 1 mit Bildpunkten BP eines ersten Bildsegments BS1, welches mindestens einen Teil der Bildpunkte des Bildobjekts BO umfaßt, dargestellt. Ferner ist in Fig. 1 ein zweites Bildsegment BS2 dargestellt, welches weitere Bildpunkte BP umfaßt, die nicht zu dem ersten Bildsegment BS1 gehören. Bildpunkte BP, die sich in dem ersten Bildsegment BS1 befinden, werden im weiteren als Bildpunkte BPS1 des ersten Segments BS1 bezeichnet. Bildpunkte, die sich in dem zweiten Bildsegment BS2 befinden, werden im weiteren als Bildpunkte BPS2 des zweiten Bildsegments BS2 bezeichnet.

Sowohl das erste Bildsegment BS1 als auch das zweite Bildsegment BS2 können im Rahmen des hier beschriebenen Verfahrens eine beliebige Form aufweisen.

Zusammen bilden das erste Bildsegment BS1 und das zweite Bildsegment BS2 ein Summenbildsegemt SBS, welches alle Bildpunkte BPS1 des ersten Segments BS1 und alle Bildpunkte BPS2 des zweiten Bildsegments BS2 enthält.

Die quadratische Form von dem Summenbildsegemt SBS in der beispielhaft dargestellten Figur dient lediglich zur einfacheren Darstellung des Verfahrens im Rahmen einer vorteilhaften Weiterbildung des Verfahrens. Es ist dem Fachmann jedoch klar ersichtlich, daß keinerlei Einschränkungen bezüglich der Form des ersten Bildsegments BS1, des zweiten Bildsegments BS2, oder auch des Summenbildsegments SBS bestehen.

Den Bildpunkten BP des Bildes B werden üblicherweise Helligkeitswerte (Luminanzwerte) und/oder Farbwerte zugeordnet. Zur einfacheren sprachlichen Darstellung wird im weiteren das Verfahren lediglich anhand von den Bildpunkten BP zugeordneten Helligkeitswerten beschrieben. Das Verfahren ist jedoch ohne weitere Änderung in den Verfahrensschritten auch lediglich für Farbwerte oder für Helligkeitswerte und Farbwerte, die den Bildpunkten BP zugeordnet werden, durchführbar.

Die Helligkeitswerte (und/oder Farbwerte) werden üblicherweise in Bildcodierungsverfahren in den Spektralbereich transformiert, wobei den Bildpunkten BP zugeordnete Spektralkoeffizienten gebildet werden. Die Spektralkoeffizienten der Bildpunkte BP und/oder die Differenzinformation der Spektralkoeffizienten werden bei üblichen Bildcodierungsverfahren quantisiert und übertragen.

Um auch ein Bildcodierungsverfahren verwenden zu können, welches auf eine spezielle Form des Summenbildsegments SBS spezialisiert ist, beispielsweise auf eine quadratische Form des Summenbildsegments SBS, obwohl das erste Bildsegment BS1 eine andere Form aufweist als die spezielle, verarbeitbare Form eines Bildsegments des Bildcodierungsverfahrens ist es erforderlich, eine Signalextrapolation durchzuführen.

Die Signalextrapolation wird auch als Signalergänzung bezeichnet. Die Signalextrapolation erfolgt von dem ersten Bildsegment BS1 auf das zweite Bildsegment BS2. Das erste Bildsegment BS1 und das zweite Bildsegment BS2 bilden zusammen das Summenbildsegment SBS. Das Summenbildsegment SBS weist in diesem speziellen Beispiel eine quadratische Form auf, jedoch ist die Form des Summenbildsegments SBS völlig beliebig.

Die Helligkeitswerte der Bildpunkte BP des Bildes B ergeben einen Signalverlauf der Helligkeitswerte der Bildpunkte BP. Entsprechend bilden die Helligkeitswerte der Bildpunkte BPS1 des ersten Bildsegments BS1 einen Signalverlauf der Helligkeitswerte für die Bildpunkte BPS1 des ersten Bildsegments BS1. Die Helligkeitswerte der Bildpunkte BPS2 des zweiten Bildsegments BS2 bilden einen Signalverlauf der Helligkeitswerte für die Bildpunkte BPS2 des zweiten Bildsegments BS2.

Durch das Verfahren wird erreicht, daß die Transformation der Helligkeitswerte in einen Spektralbereich in einer Weise erfolgt, daß möglichst durch die Signalextrapolation, welche im weiteren beschrieben wird, keine unnötigen hohen Spektralanteile und somit Spektralkoeffizienten verursacht werden.

Bei der Signalexptrapolation wird der Signalverlauf der Helligkeitswerte der Bildpunkte BPS1 des ersten Bildsegments BS1 auf Helligkeitswerte von Bildpunkten BPS2 des zweiten Bildsegments BS2 extrapoliert.

Bei einer Signalexptrapolation ist es bekannt, den Bildpunkten BPS2 des zweiten Bildsegments BS2 feste Helligkeitswerte zuzuordnen [4]. Durch die Zuordnung eines festen, einheitlichen Werts für alle Bildpunkte BPS2 des zweiten Bildsegments BS2 werden jedoch Sprungstellen in einem Grenzbereich GB zwischen dem ersten Bildsegment BS1 und dem zweiten Bildsegment BS2 verursacht. Die Sprungstellen im Signalverlauf der Helligkeitswerte in dem Grenzbereich GB führen zu Spektralkoeffizienten hoher Frequenzen, welche zu einem erhöhten Codierungsaufwand, Quantisierungsaufwand und somit Übertragungsaufwand bei der Codierung und Übertragung des digitalen Bildes B führt.

Mit dem Grenzbereich GB wird ein Bereich benachbarter Bildpunkte BPS1, BPS2 des ersten Bildsegments BS1 und des zweiten Bildsegments BS2 bezeichnet. Der Grenzbereich GB kann sich sowohl lediglich über direkt benachbarte Bildpunkte BPS1, BPS2 des ersten Bildsegments BS1 und des zweiten Bildsegments BS2 erstrecken, er kann aber auch jeweils auf weiter in dem jeweiligen Bildsegment BS1, BS2 sich befindende Bildpunkte BPS1, BPS2 ausgedehnt werden.

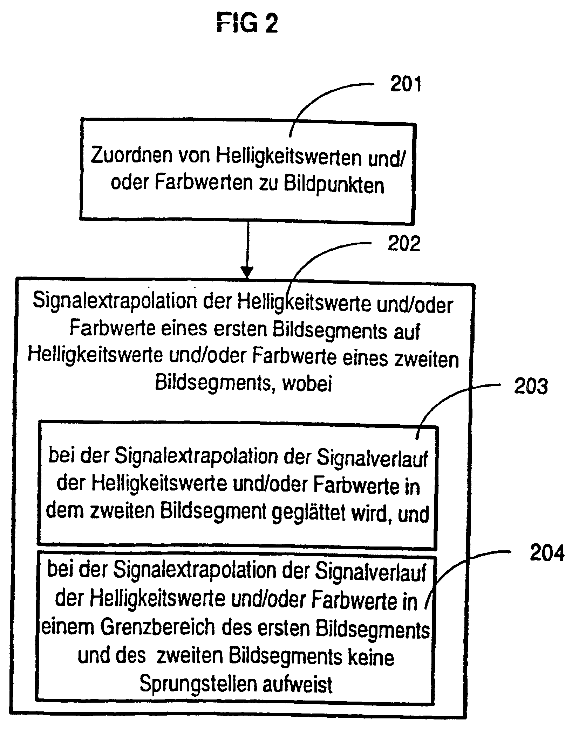

Um den bei dem bekannten Verfahren vorhandenen Nachteil entstehender Sprungstellen in dem Grenzbereich GB zu vermeiden, werden bei dem erfindungsgemäßen Verfahren nach einer Zuordnung von Helligkeitswerten (und/oder Farbwerten) zu den Bildpunkten BP des Bildes B 201 die Helligkeitswerte der Bildpunkte BPS1 des ersten Bildsegments BS1 auf Helligkeitswerte von Bildpunkten BPS2 des zweiten Bildsegments BS2 extrapoliert 202 (vgl. Fig. 2).

Die Signalexptrapolation wird in einer Weise durchgeführt, daß der im weiteren zur Codierung des ergänzten Blocks, also der Bildpunkte BPS2 des zweiten Bildsegments BS2, erforderliche Aufwand möglichst gering ist.

Um dieses Ziel zu erreichen, wird die Signalexptrapolation in einer Weise durchgeführt, daß

- der Signalverlauf der Helligkeitswerte der Bildpunkte BPS2 des zweiten Bildsegments BS2 einen möglichst glatten Verlauf aufweist, und
- gleichzeitig möglichst keine Sprungstellen in dem Signalverlauf der Helligkeitswerte in dem Grenzbereich GB zwischen dem ersten Bildsegment BS1 und dem zweiten Bildsegment BS2 auftreten.

Diese beiden Anforderungen werden dadurch erfüllt, daß zum einen bei der Signalextrapolation der Signalverlauf der Helligkeitswerte der Bildpunkte BPS2 des zweiten Bildsegments BS2 geglättet wird 203 und zum anderen dadurch, daß der Signalverlauf der Helligkeitswerte der Bildpunkte BPS2 des zweiten Bildsegments BS2 an die Helligkeitswerte der Bildpunkte BPS1 des ersten Bildsegments BS1 in dem Grenzbereich GB zwischen dem ersten Bildsegment BS1 und dem zweiten Bildsegment BS2 angeglichen wird 204.

Im weiteren werden zwei Realisierungsmöglichkeiten dargestellt, mit denen die oben beschriebenen Verfahrensschritte beispielsweise realisiert werden können.

**Ausführungsbeispiel 1: Lösung im Ortsbereich**

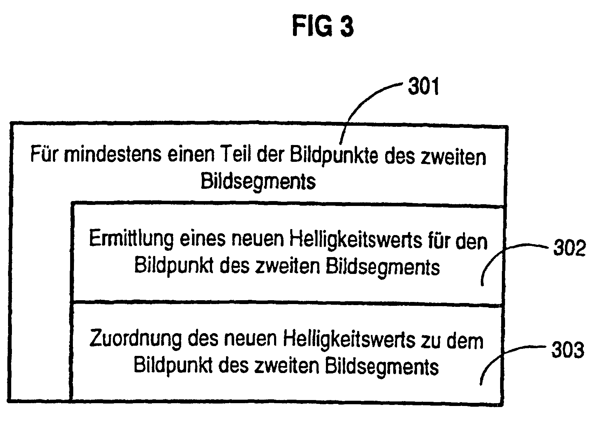

In Fig. 3 ist in einem Ablaufdiagramm ein erstes Ausführungsbeispiel zur Realisierung einer "geglätteten" Signalextrapolation dargestellt.

Es wird in diesem Beispiel zur Signalextrapolation ein digitales Filter mit einer glättenden Charakteristik verwendet. Mögliche digitale Filter, die in diesem Verfahren verwendet werden können, sind beispielsweise ein lokales Mittelwert-Filter oder auch ein Median-Filter oder ein beliebiges digitales Filter mit Tiefpaßcharakteristik.

Im weiteren wird das erste Auführungsbeispiel mit dem lokalen Mittelwert-Filter weiter erläutert, was jedoch keineswegs als einzige Lösungsmöglichkeit zu verstehen ist.

Anschaulich wird bei dieser Lösungsvariante die Filtermaske des digitalen Filters auf mindestens einen Teil der Bildpünkta BPS2 des zweiten Bildsegments BS2 "gelegt" 301, wodurch für mindestens einen Teil der Bildpunkte BPS2 des zweiten Bildsegments BS2 entsprechend des Operators des digitalen Filters ein neuer Helligkeitswert, z. B. ein Mittelwert der Helligkeitswerte aus benachbarten Bildpunkten, für den jeweiligen Bildpunkt BPS2 des zweiten Bildsegment BS2 ermittelt wird 302. Der "Mittelwert" wird dem jeweiligen Bildpunkt BPS2 des zweiten Bildsegments BS2 zugeordnet 303.

Für den Spezialfall des lokalen Mittelwert-Filters ergibt sich für den jeweiligen Bildpunkt BPS2 des zweiten Bildsegments BS2 z. B. folgende Vorschrift für die Ermittlung eines neuen Helligkeitswerts, der dem jeweiligen Bildpunkt $x_{ij}$ des zweiten Bildsegments BS2 zugeordnet wird. Hierbei wird mit einem ersten Index i die jeweilige Zeile bezeichnet, in der sich der Bildpunkt $x_{ij}$ befindet, und mit einem Spaltenindex j wird die jeweilige Zeile bezeichnet, in dem der jeweilige Bildpunkt $x_{ij}$ liegt.

$$S\{x_{ij}\} = \frac{1}{4}\left(x_{i,j-1} + x_{i-1,j} + x_{i,j+1} + x_{i+1,j}\right) \tag{1}.$$

Es ist in einer Weiterbildung des Verfahrens vorteilhaft, die Bildpunkte BPS2 des zweiten Bildsegments BS2 dem Mittelwert-Operator in einer Reihenfolge zu unterziehen, die beginnt mit Bildpunkten $x_{ij}$ des zweiten Bildsegments, die an Bildpunkte BPS1 des ersten Bildsegments BS1 angrenzen. Auf diese Weise wird möglichst viel Information von dem Signalverlauf der Helligkeitswerte der Bildpunkte BPS1 des ersten Bildsegments BS1 in das zweite Bildsegment BS2 überführt.

Auch wenn in der Gleichung (1) jeweils 4 direkt benachbarte Bildpunkte in die Ermittlung des neuen Helligkeitswertes mit einfließen, was einer kreuzförmigen Filtermaske entspricht, die auf den jeweiligen Bildpunkt $x_{ij}$ "gelegt" wird, so kann die Form der Filtermaske jedoch beliebig sein, d. h. es kön nen beliebige Punkte zur Ermittlung des neuen Helligkeitswertes für den jeweiligen Bildpunkt $x_{ij}$ verwendet werden.

Diese Vorschrift zur Ermittlung neuer Helligkeitswerte von Bildpunkten BPS2 des zweiten Bildsegments BS2 wird für eine beliebige Anzahl von Bildpunkten BPS2 des zweiten Bildsegments BS2, vorzugsweise alle, durchgeführt.

Es hat sich herausgestellt, daß es vorteilhaft ist, die Helligkeitswerte der Bildpunkte BPS2 des zweiten Bildsegments BS2 zu Beginn des Verfahrens mit einem vorgebbaren Wert zu initialisieren, vorzugsweise mit einem Mittelwert der Helligkeitswerte mindestens eines Teils der Bildpunkte BPS1 des ersten Bildsegments BS1.

Auf diese Weise wird das Ergebnis des Verfahrens weiter verbessert, wodurch eine weitere Verringerung benötigter Übertragungskapazität erreicht wird.

Ferner wird mit dieser Weiterbildung ein im weiteren beschriebenes iteratives Verfahren einer Weiterbildung des Verfahrens beschleunigt, da durch eine geeignete Intitialisierung die Anzahl benötigter Iterationen bei der Weiterbildung erheblich verringert wird.

Es ist in einer Weiterbildung des Verfahrens vorgesehen, das Verfahren iterativ, also mehrmals für das Summenbildsegment SBS durchzuführen. Bei Verwendung des Laplace-Operators im Rahmen des Verfahrens wird dabei z. B. folgende Iterationsvorschrift verwendet:

$$x_{ij}^{(k+1)} = S\{x_{ij}^{(k)}\} \tag{2}.$$

Dabei wird mit k der jeweilige Iterationsschritt eindeutig gekennzeichnet.

Bei mehrmaliger Durchführung des Verfahrens, also bei mehreren Iterationen werden die Glättungseigenschaften sowohl in dem Grenzbereich GB als auch in dem zweiten Bildsegment BS2 deutlich verbessert.

Da jedoch bei einer zunehmenden Anzahl von Iterationen die Verbesserung von einem Iterationsschritt zum nächsten immer geringer wird, ist es vorteilhaft, in Weiterbildungen des Verfahrens ein Abbruchkriterium zur Beendigung der Iterationen vorzusehen.

Es sind verschiedene Varianten eines Abbruchkriteriums im Rahmen des Verfahrens vorgesehen.

Es ist möglich, zu Beginn des Verfahrens vorzugeben, wie oft das Verfahren für das jeweilige Summenbildsegment SBS durchgeführt werden soll.

Ferner ist es möglich, nach jeder Iteration eine Summe von Änderungen von mindestens einem Teil der Helligkeitswerte der Bildpunkte BPS2 des zweiten Bildsegments S2 zu ermitteln, und diese mit einer gebildeten Summe von Änderungen mindestens einer vorangegangenen Iteration zu vergleichen. Ist die Differenz der beiden Summen kleiner als ein vorgebbarer erster Stellenwert SW1, so braucht keine weitere Iteration durchgeführt werden.

Es ist ebenso vorgesehen, daß die Summe von Änderungen mit einem beliebig gestalteten Mittelwert von Summen vorangegangener Iterationen verglichen wird.

Ferner ist es vorgesehen, als Abbruchskriterium folgende Vorschrift zu verwenden. Es wird nach einer Iteration ein Mittelwert von Änderungen von mindestens einem Teil der Helligkeitswerte der Bildpunkte BPS2 des zweiten Bildsegments BS2 ermittelt und der Mittelwert wird wiederum mit einem Mittelwert von Änderungen der Helligkeitswerte von mindestens einer vorangegangenen Iteration verglichen. Ist die Differenz der beiden Mittelwerte kleiner als ein vorgebbarer zweiter Schwellenwert SW2, so muß keine weitere Iteration durchgeführt werden.

Auch ist es vorzusehen, das Verfahren solange durchzuführen, bis nach einer Iteration von mindestens einem vorgebbaren Teil der Helligkeitswerte der Bildpunkte BPS2 des zweiten Bildsegments BS2 die Änderung im Vergleich zumindestens einer vorangegangenen Iteration kleiner ist als ein vorgebbarer dritter Schwellenwert SW3.

Ferner ist es in einer Weiterbildung des Verfahrens vorgesehen, daß Bildpunkte BP, die sich außerhalb des Summenbildsegments SBS befinden, bei der Bildung des Helligkeitswerts der Bildpunkte BPS2 des zweiten Bildsegments BS2 nicht berücksichtigt werden.

Entsprechend wird für den Spezialfall des lokalen Mittelwert-Operators beispielsweise der Faktor $\frac{1}{4}$ in den Gleichungen (1) und (2) um die Anzahl nicht berücksichtigter Bildpunkte reduziert.

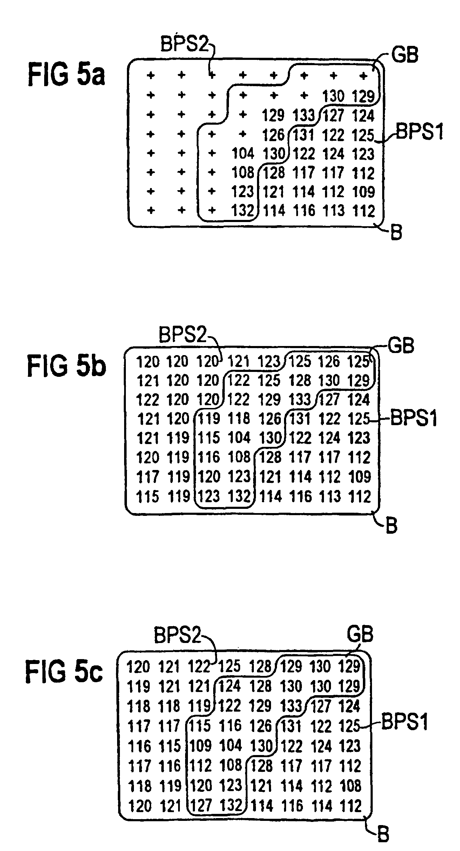

In Fig. 5a ist das Summenbildsegment SBS mit beispielhaft dargestellten Helligkeitswerten beschrieben. Mit einem "+" werden die Helligkeitswerte der Bildpunkte BPS2 des zweiten Bildsegments BS2 zu Beginn des Verfahrens symbolisch dargestellt.

In Fig. 5b ist das Summenbildsegment SBS nach Durchführung des Verfahrens unter Verwendung des lokalen Mittelwert-Filters bei einer Intitialisierung der Bildpunkte BPS2 des zweiten Bildsegments BS2 mit dem Mittelwert 120 der Bildpunkte BPS1 des ersten Bildbereichs BS1 nach einigen Iterationen des Verfahens dargestellt.

Es ist deutlich erkennbar, daß zum einen in dem Grenzbereich GB keine größeren Sprungstellen auftreten und zum anderen ist erkennbar, daß der Signalverlauf der Helligkeitswerte der Bildpunkte des zweiten Bildsegments BS2 einen geglätteten Verlauf aufweist.

**Ausführungsbeispiel 2: Lösung im Frequenzbereich**

Im folgenden wird eine weitere Möglichkeit zur Realisierung der oben beschriebenen Kriterien dargestellt.

Zu diesem Zweck wird eine erste Funktion F1 im weiteren erläutert, die beispielsweise nach folgender Vorschrift gebildet wird:

$$F1 = \sum_{x_{ij} \in BS1} \left[ f\left(x_{ij}\right) - g\left(x_{ij}\right) \right]^2 + \lambda \cdot \sum_{x_{ij} \notin BS1} \left| g''\left(x_{ij}\right) \right|^2 \qquad (3).$$

Die erste Funktion F1 weist zwei Summanden auf, einen ersten Term und einen zweiten Term 401.

Mit $f(x_{ij})$ wird die gegebene Originalfunktion, d. h. der Signalverlauf der Helligkeitswerte (und/oder der Farbwerte) der Bildpunkte BP des Bildes B bezeichnet.

Mit $g(x_{ij})$ wird eine ergänzte Funktion bezeichnet, die durch die Signalextrapolation der Originalfunktion $f(x_{ij})$ auf das zweite Bildsegment BS2 gebildet wird. Die ergänzte Funktion wird im weiteren als ergänzter Signalverlauf $g(x_{ij})$ bezeichnet.

Der ergänzte Signalverlauf $g(x_{ij})$ ist zu Beginn des Verfahrens noch nicht bekannt.

Der erste Term dient dazu, sicherzustellen, daß der ergänzte Signalverlauf $g(x_{ij})$ mit der Originalfunktion $f(x_{ij})$ in dem ersten Bildsegment HS1 auch nach Durchführung des Verfahrens übereinstimmt.

Der zweite Term enthält allgemein ein Glattheitskriterium für den Signalverlauf der Bildpunkte BPS2 des zweiten Bildsegments BS2.

Mit dem Glattheitskriterium wird zum einen für einen möglichst glatten Signalverlauf der Helligkeitswerte der Bildpunkte BPS2 des zweiten Bildsegments BS2 sowie für möglichst geringe Sprungstellen in dem Grenzbereich GB gesorgt.

Der ergänzte Signalverlauf $g(x_{ij})$ läßt sich im Spektralbereich als eine mathematische Reihe darstellen, d. h. eine Summe von Produkten folgenden Aufbaus:

$$g\left(x_{ij}\right) = \sum_{k,l} c_{kl} \cdot \varphi_{kl}\left(x_{ij}\right) \qquad (4).$$

Dabei werden mit $c_{kl}$ Spektralkoeffizienten und mit $\varphi_{kl}(x_{ij})$ Basisfunktionen der jeweils verwendeten Transformationscodierung, beispielsweise der diskreten Cosinustransformation (DCT) bezeichnet. Durch Einsetzen der Gleichung (4) in die erste Funktion F1 wird eine Zwischenfunktion ZF1 beispielsweise folgenden Aufbaus gebildet 402:

$$ZF1 = \sum_{x_{ij} \in BS1} \left[f\left(x_{ij}\right) - \sum_{k,l} c_{kl} \cdot \varphi_{kl}\left(x_{ij}\right)\right]^2 +$$

$$+ \lambda \cdot \sum_{x_{ij} \notin BS1} \left|\left(\sum_{k,l} c_{kl} \cdot \varphi_{kl}\left(x_{ij}\right)\right)''\right|^2 \qquad (3).$$

Als Unbekannte in der Zwischenfunktion ZF1 sind nunmehr die Spektralkoeffizienten $c_{kl}$ vorhanden.

Um die Spektralkoeffizienten $c_{kl}$ zu ermitteln, und dabei einen möglichst glatten Signalverlauf in dem zweiten Bildsegment BS2 und einen möglichst glatten Verlauf im Grenzbereich GB sicherzustellen, wird die Zwischenfunktion ZF1 minimiert.

Dies geschieht durch Differentiation Zwischenfunktion ZF1 nach den jeweiligen Spektralkoeffizienten $c_{kl}$ 403 und zur Ermittlung der "optimalen" Spektralkoeffizienten $c_{kl}$ dadurch, daß das entstandene lineare Gleichungssystem gleich 0 gesetzt wird.

Dies führt zu einem eindeutig lösbaren linearen Gleichungssystem für die Bestimmung der "optimalen" Spektralkoeffizienten $c_{kl}$ bezüglich der oben genannten Kriterien.

Nach Lösung des linearen Gleichungssystems sind direkt die optimalen Spektralkoeffizienten $c_{kl}$ bezüglich der oben genannten Kriterien ermittelt 404.

In Figur 5c ist das Beispiel aus Fig. 5a nach Durchführung dieses Verfahrens im Frequenzbereich für einen beispielhaft gewählten Parameterwert $\lambda$=100 dargestellt. Der Parameterwert $\lambda$ kann praktisch beliebig gewählt werden, da er bezüglich der erreichbaren Ergebnisse sehr unkritisch ist.

In dem zweiten Term wird vorteilhafterweise als Glattheitskriterium eine beliebige Ableitung des ergänzten Signalverlaufs $g(x_{ij})$ verwendet.

In einer Weiterbildung des Verfahrens ist es jedoch vorteilhaft, die zweite Ableitung zu verwenden, da in diesem Fall das entstehende lineare Gleichungssystem einfacher lösbar wird.

Der zweite Term der ersten Funktion F1 muß nicht notwendigerweise den dargestellten Aufbau vorweisen.

In einer Weiterbildung für das gesamte Verfahren, d. h. für beide Ausführungsbeispiele, ist es vorgesehen, daß bei der Durchführung des Verfahrens Ganzzahl-Arithmetik verwendet wird.

Durch diese Weiterbildung wird eine erhebliche Vereinfachung des benötigten Hardwareaufwandes zur Durchführung des Verfahrens erreicht. Weiterhin wird eine erhebliche Beschleunigung bei der Durchführung des Verfahrens durch einen Rechner erreicht.

Das Verfahren kann im Rahmen sowohl einer Transformationscodierung, beispielsweise der diskreten Cosinustransformation, als auch beispielsweise im Rahmen einer Wavelet-Transformation oder im Rahmen einer Teilband-Transformation durchgeführt werden. Der Ausdruck "im Rahmen einer solchen Transformation" ist in diesem Zusammenhang in der Weise zu verstehen, daß in dem Ausführungsbeispiel 1 der ermittelte Signalverlauf der entsprechenden Transformation zugeführt wird, bzw. in dem Ausführungsbeispiel 2 die Basisfunktionen entsprechend der gewählten Transformation gewählt werden.

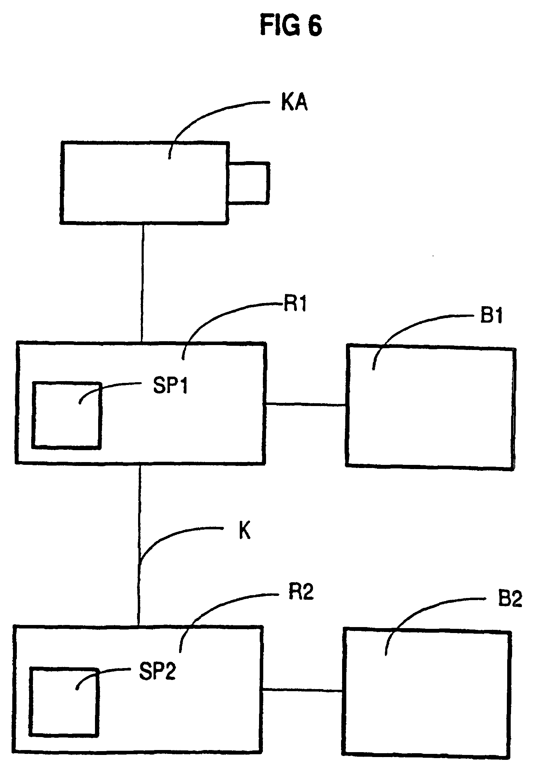

In Fig. 6 ist u. a. ein erster Rechner R1 dargestellt, mit dem das erfindungsgemäße Verfahren durchgeführt wird.

Ferner ist in Fig. 6 eine Kamera KA dargestellt, mit der eine Folge von Bildern aufgenommen wird, welche in dem ersten Rechner $R_1$ zu einer Folge von digitalen Bildern B umgewandelt wird. Die digitalen Bilder B werden in einem Speicher SP1 des ersten Rechners R1 gespeichert. Ferner ist in dieser Anordnung für den ersten Rechner R1 ein Bildschirm B1 vorgesehen.

Bei einer Übertragung des digitalisierten Bildes B wird vor der Übertragung des digitalisierten Bildes B das Verfahren auf die einzelnen Bildsegmente BS1, BS2 angewendet. Die daraus resultierenden Spektralkoeffizienten werden über einen Kanal K zu einem zweiten Rechner R2 übertragen, wo sie in einem zweiten Speicher SP2 gespeichert werden. Nach Durchführung der inversen Bildtransformationscodierung und der inversen konformen Abbildung wird das digitalisierte Bild B wieder in dem zweiten Rechner R2 rekonstruiert und einem Benutzer auf dem zweiten Bildschirm B2 dargestellt.

In diesem Dokument wurden folgende Veröffentlichungen zitiert:

[1] M. Gilge, T. Engelhardt und R. Mehlan, Coding of arbitrarily shaped image segments based on a generalized orthogonal transform, Singnal Processing: Image Communication 1, S. 153-180, Oktober 1989

[2] T.Sikora und Béla Makai, Shape-adaptive DCT for generic coding of video, IEEE Trans. Circuits and Systems for Video Technology 5, S. 59-62, Februar 1995

[3] T. Sikora, S. Bauer und Béla Makai, Efficiency of shape-adaptive 2-D transforms for coding of arbitrary shaped image segments, IEEE Trans.Circuits and Systems for Video Technology 5, S. 254-258, Juni 1995

[4] I. Donescu et al, A Comparison of Efficient Methods for the Coding of Arbitrarily Shaped Image Segments, Proceedings of Picture Coding Symposium, Melbourne, S. 13. - 15. 3. 1996, S. 181 - 186, 1996

[5] R. J. Clarke: Transform Coding of Images, Academic Press, London, S. 72 - 134, 1985

[6] DE 41 36 636 A1

[7] J.-R. Ohm, Digitale Bildcodierung, Springer, Berlin, ISBN 3-540-58579-6S. 32 - 49, 1995

[8] Yanbin Yu et al., "Pictorial Transform Coding for Tessellating Arbitrary Shaped Regions", SIGNAL PROCESSING, THEORIES AND APPLICATIONS, BARCELONA, Sept. 18-21, 1990, Bd. 2, Torres L., Masgrau E., Lagunas M.A., Seiten 901, 904

**Patentansprüche**

1. Verfahren zur Bearbeitung von Bildpunkten (BPS1) eines ersten Bildsegments (BS1), welches eine beliebige Form aufweist, durch einen Rechner,

    - bei dem den Bildpunkten (BPS1) des ersten Bildsegments (BS1) ein Helligkeitswert und/oder ein Farbwert zugeordnet wird (201),
    - bei dem die Helligkeitswerte und/oder die Farbwerte auf Bildpunkte (BPS2) eines zweiten Bildsegments (BS2), welches eine beliebige Form aufweist, extrapoliert werden (202),
    - bei dem die Extrapolation in einer Weise erfolgt, daß ein Signalverlauf der Helligkeitswerte und/oder der Farbwerte der Bildpunkte (BPS2) des zweiten Bildsegments (BS2) geglättet wird (203), und
    - bei dem die Extrapolation in einer Weise erfolgt, daß in dem Signalverlauf die Helligkeitswerte und/oder die Farbwerte der Bildpunkte (BPS2) des zweiten Bildsegments (BS2) an die Helligkeitswerte und/oder an die Farbwerte der Bildpunkte (BPS1) des ersten Bildsegments (BS1) in einem Grenzbereich (GB) zwischen dem ersten Bildsegment (BS1) und dem zweiten Bildsegmente (BS2) angeglichen werden (204),
    - bei dem die Helligkeitswerte und/oder die Farbwerte der Bildpunkte (BPS2) des zweiten Bildsegments (BS2) zu Beginn des Verfahrens mit einem vorgebbaren Wert initialisiert werden **dadurch gekennzeichnet, daß** die initialisierten Bildpunkte zur Extrapolation verwendet werden, wobei sich der vorgebbare Wert aus dem einen Mittelwert der Helligkeitswerte und/oder der Farbwerte der Bildpunkte (BPS1) des ersten Bildsegments (BS1) ergibt.

2. Verfahren nach Anspruch 1,
   bei dem zur Extrapolation ein digitaler Filter mit einer glättenden Charakteristik verwendet wird.

3. Verfahren nach Anspruch 1 oder 2,

bei dem die Extrapolation der Helligkeitswerte und/oder der Farbwerte der Bildpunkte (BPS2) des zweiten Bildsegments (BS2) ausgehend von Bildpunkten (BPS2) des zweiten Bildsegments (BS2), die den Bildpunkten (BPS1) des ersten Bildsegments (BS1) benachbart sind, erfolgt.

4. Verfahren nach Anspruch 2 oder 3,
   bei dem als digitales Filter ein lokales Mittelwert-Filter verwendet wird.

5. Verfahren nach Anspruch 2 oder 3,
   bei dem als digitales Filter ein Median-Filter verwendet wird.

6. Verfahren nach einem der Ansprüche 1 bis 5,
   bei dem das Verfahren mehrmals durchgeführt wird.

7. Verfahren nach Anspruch 6,
   bei dem das Verfahren solange durchgeführt wird, bis nach einer Iteration eine Summe von Änderungen von mindestens einem Teil der Helligkeitswerte und/oder der Farbwerte der Bildpunkte (BPS2) des zweiten Bildsegments (BS2) im Vergleich zu mindestens einer vorangegangenen Iteration kleiner ist als ein vorgebbarer erster Schwellenwert (SW1).

8. Verfahren nach Anspruch 6,
   bei dem das Verfahren solange durchgeführt wird, bis nach einer Iteration ein Mittelwert von Änderungen von mindestens einem Teil der Helligkeitswerte und/oder der Farbwerte der Bildpunkte (BPS2) des zweiten Bildsegments (BS2) im Vergleich zu mindestens einer vorangegangenen Iteration kleiner ist als ein vorgebbarer zweiter Schwellenwert (SW2).

9. Verfahren nach Anspruch 6,
   bei dem das Verfahren solange durchgeführt wird, bis nach einer Iteration Änderungen von mindestens einem Teil der Helligkeitswerte und/oder der Farbwerte der Bildpunkte (BPS2) des zweiten Bildsegments (BS2) im Vergleich zu mindestens einer vorangegangenen Iteration kleiner ist als ein vorgebbarer dritter Schwellenwert (SW3).

10. Verfahren nach Anspruch 1,

    - bei dem zur Extrapolation eine erste Funktion (F1) gebildet wird, welche mindestens einen ersten Term und einen zweiten Term aufweist,
    - bei dem mit dem ersten Term gewährleistet wird, daß der Signalverlauf der Helligkeitswerte und/oder der Farbwerte der Bildpunkte (BPS1) des ersten Bildsegments (BS1) möglichst erhalten bleibt,
    - bei dem mit dem zweiten Term gewährleistet wird, daß der Signalverlauf der Helligkeitswerte und/oder der Farbwerte der Bildpunkte (BPS2) des zweiten Bildsegments (BS2) geglättet wird, und
    - bei dem mit dem zweiten Term gewährleistet wird, daß der Signalverlauf der Helligkeitswerte und/oder der Farbwerte der Bildpunkte (BPS2) des zweiten Bildsegments (BS2) an die Helligkeitswerte und/oder an die Farbwerte der Bildpunkte (BPS1) des ersten Bildsegments (BS1) in einem Grenzbereich (GB) zwischen dem ersten Bildsegment (BS1) und dem zweiten Bildsegmente (BS2) angeglichen werden.

11. Verfahren nach Anspruch 10,
    bei dem der erste Term aus einer Differenz des Signalverlaufs $(f(x_{ij}))$ der Helligkeitswerte und/oder der Farbwerte der Bildpunkte (BPS1) des ersten Bildsegments (BS1) und einem auf die Helligkeitswerte und/oder der Farbwerte der Bildpunkte (BPS2) des zweiten Bildsegments (BS2) ergänzten Signalverlauf $(g(x_{ij}))$ bestimmt wird.

12. Verfahren nach Anspruch 10 oder 11,
    bei dem der zweite Term sich mindestens ergibt aus einer beliebigen Differentiation eines auf die Helligkeitswerte und/oder die Farbwerte der Bildpunkte (BPS2) des zweiten Bildsegments (BS2) ergänzten Signalverlaufs $(g(x_{ij}))$.

13. Verfahren nach Aspruch 12,
    bei dem der zweite Term sich mindestens ergibt aus einer zweiten Differentiation des auf die Helligkeitswerte und/oder die Farbwerte der Bildpunkte (BPS2) des zweiten Bildsegments (BS2) ergänzten Signalverlaufs $(g(x_{ij}))$.

14. Verfahren nach einem der Ansprüche 10 bis 13,

- bei dem der ergänzte Signalverlauf ($g(x_{ij})$) in den Spektralbereich transformiert wird, wobei der transformierte ergänzte Signalverlauf ($g(x_{ij})$) Spektralkoeffizienten aufweist,
- bei dem eine Zwischenfunktion gebildet wird, indem der transformierte ergänzte Signalverlauf ($g(x_{ij})$) in die erste Funktion (F1) eingesetzt wird,
- bei dem ein lineares Gleichungssystem gebildet wird, indem die Zwischenfunktion nach den jeweiligen Spektralkoeffizienten differenziert und gleich Null gesetzt wird,
- bei dem Werte der Spektralkoeffizienten ermittelt werden, indem das lineare Gleichungssystem nach den Spektralkoeffizienten gelöst wird

15. Verfahren nach einem der Ansprüche 1 bis 14,
bei dem in dem Verfahren Ganzzahl-Arithmetik verwendet wird.

16. Verfahren nach einem der Ansprüche 1 bis 15,
bei dem das erste Bildsegment (BS1) und das zweite Bildsegment (BS2) zusammen eine quadratische Form aufweisen.

17. Verfahren nach einem der Ansprüche 1 bis 16 verwendet im Rahmen einer Transformationscodierung.

18. Verfahren nach einem der Ansprüche 1 bis 16 verwendet im Rahmen einer Diskreten Cosinus Transformation (DCT).

19. Verfahren nach einem der Ansprüche 1 bis 16 verwendet im Rahmen einer Wavelet-Transformation.

20. Verfahren nach einem der Ansprüche 1 bis 16 verwendet im Rahmen einer Teilband-Transformation.

21. Vorrichtung zur Bearbeitung von Bildpunkten (BPS1) eines ersten Bildsegments (BS1), welches eine beliebige Form aufweist,
mit einer Recheneinheit, die derart eingerichtet ist, daß

- den Bildpunkten (BPS1) des ersten Bildsegments (BS1) ein Helligkeitswert und/oder ein Farbwert zugeordnet wird (201),
- die Helligkeitswerte und/oder die Farbwerte auf Bildpunkte (BPS2) eines zweiten Bildsegments (BS2), welches eine beliebige Form aufweist, extrapoliert werden (202),
- die Extrapolation in einer Weise erfolgt, daß ein Signalverlauf der Helligkeitswerte und/oder der Farbwerte der Bildpunkte (BPS2) des zweiten Bildsegments (BS2) geglättet wird (203), und
- die Extrapolation in einer Weise erfolgt, daß in dem Signalverlauf die Helligkeitswerte und/oder die Farbwerte der Bildpunkte (BPS2) des zweiten Bildsegments (BS2) an die Helligkeitswerte und/oder an die Farbwerte der Bildpunkte (BPS1) des ersten Bildsegments (BS1) in einem Grenzbereich (GB) zwischen dem ersten Bildsegment (BS1) und dem zweiten Bildsegmente (BS2) angeglichen werden (204) und
- die Helligkeitswerte und/oder die Farbwerte der Bildpunkte (BPS2) des zweiten Bildsegments (BS2) zu Beginn des Verfahrens mit einen vorgebbaren Wert initialisiert werden, **dadurch gekennzeichnet, daß** die initialisierten Bildpunkte zur Extrapolation verwendet werden, wobei sich der vorgebbare Wert aus dem einen Mittelwert der Helligkeitswerte und/oder der Farbwerte der Bildpunkte (BPS1) des ersten Bildsegments (BS1) ergibt.

22. Vorrichtung nach Anspruch 21,
bei der die Recheneinheit derart eingerichtet ist, daß zur Extrapolation ein digitaler Filter mit einer glättenden Charakteristik verwendet wird.

23. Vorrichtung nach Anspruch 21 oder 22,
bei der die Recheneinheit derart eingerichtet ist, daß die Extrapolation der Helligkeitswerte und/oder der Farbwerte der Bildpunkte (BPS2) des zweiten Bildsegments (BS2) ausgehend von Bildpunktcn (BPS2) des zweiten Bildsegments (BS2), die den Bildpunkten (BPS1) des ersten Bildsegments (BS1) benachbart sind, erfolgt.

24. Vorrichtung nach Anspruch 22 oder 23,
bei der die Recheneinheit derart eingerichtet ist, daß als digitales Filter ein lokales Mittelwert-Filter verwendet wird.

25. Vorrichtung nach Anspruch 22 oder 23,

bei der die Recheneinheit derart eingerichtet ist, daß als digitales Filter ein Median-Filter verwendet wird.

26. Vorrichtung nach Anspruch 21,
bei der die Recheneinheit derart eingerichtet ist, daß

- zur Extrapolation eine erste Funktion (F1) gebildet wird, welche mindestens einen ersten Term und einen zweiten Term aufweist,
- mit dem ersten Term gewährleistet wird, daß der Signalverlauf der Helligkeitswerte und/oder der Farbwerte der Bildpunkte (BPS1) des ersten Bildsegments (BS1) möglichst erhalten bleibt,
- mit dem zweiten Term gewährleistet wird, daß der Signalverlauf der Helligkeitswerte und/oder der Farbwerte der Bildpunkte (BPS2) des zweiten Bildsegments (BS2) geglättet wird, und
- mit dem zweiten Term gewährleistet wird, daß der Signalverlauf der Helligkeitswerte und/oder der Farbwerte der Bildpunkte (BPS2) des zweiten Bildsegments (BS2) an die Helligkeitswerte und/oder an die Farbwerte der Bildpunkte (BPS1) des ersten Bildsegments (BS1) in einem Grenzbereich (GB) zwischen dem ersten Bildsegment (BS1) und dem zweiten Bildsegmente (BS2) angeglichen werden.

27. Vorrichtung nach Anspruch 26,
bei der die Recheneinheit derart eingerichtet ist, daß der erste Term aus einer Differenz des Signalverlaufs ($f(x_{ij})$) der Helligkeitswerte und/oder der Farbwerte der Bildpunkte (BPS1) des ersten Bildsegments (BS1) und einem auf die Helligkeitswerte und/oder der Farbwerte der Bildpunkte (BPS2) des zweiten Bildsegments (BS2) ergänzten Signalverlauf ($g(x_{ij})$) bestimmt wird.

28. Vorrichtung nach Anspruch 26 oder 27,
bei der die Recheneinheit derart eingerichtet ist, daß der zweite Term sich mindestens ergibt aus einer beliebigen Differentiation eines auf die Helligkeitswerte und/oder die Farbwerte der Bildpunkte (BPS2) des zweiten Bildsegments (BS2) ergänzten Signalverlaufs ($g(x_{ij})$).

29. Vorrichtung nach Aspruch 28,
bei der die Recheneinheit derart eingerichtet ist, daß der zweite Term sich mindestens ergibt aus einer zweiten Differentiation des auf die Helligkeitswerte und/oder die Farbwerte der Bildpunkte (BPS2) des zweiten Bildsegments (BS2) ergänzten Signalverlaufs ($g(x_{ij})$).

30. Vorrichtung nach einem der Ansprüche 26 bis 29,
bei der die Recheneinheit derart eingerichtet ist, daß

- der ergänzte Signalverlauf ($g(x_{ij})$) in den Spektralbereich transformiert wird, wobei der transformierte ergänzte Signalverlauf ($g(x_{ij})$) Spektralkoeffizienten aufweist,
- eine Zwischenfunktion gebildet wird, indem der transformierte ergänzte Signalverlauf ($g(x_{ij})$) in die erste Funktion (F1) eingesetzt wird,
- ein lineares Gleichungssystem gebildet wird, indem die Zwischenfunktion nach den jeweiligen Spektralkoeffizienten differenziert und gleich Null gesetzt wird,
- Werte der Spektralkoeffizienten ermittelt werden, indem das lineare Gleichungssystem nach den Spektralkoeffizienten gelöst wird

31. Vorrichtung nach einem der Ansprüche 21 bis 30,
bei der die Recheneinheit derart eingerichtet ist, daß in dem Verfahren Ganzzahl-Arithmetik verwendet wird.

32. Vorrichtung nach einem der Ansprüche 21 bis 31,
bei der die Recheneinheit derart eingerichtet ist, daß das erste Bildsegment (BS1) und das zweite Bildsegment (BS2) zusammen eine quadratische Form aufweisen.

33. Vorrichtung nach einem der Ansprüche 21 bis 32 verwendet im Rahmen einer Transformationscodierung.

34. Vorrichtung nach einem der Ansprüche 21 bis 32 verwendet im Rahmen einer Diskreten Cosinus Transformation (DCT).

35. Vorrichtung nach einem der Ansprüche 21 bis 32 verwendet im Rahmen einer Wavelet-Transformation.

**36.** Vorrichtung nach einem der Ansprüche 21 bis 32 verwendet im Rahmen einer Teilband-Transformation.

**Claims**

1. Method for processing pixels (BPS1) of a first image segment (BS1) of any shape by means of a computer

   - wherein a brightness value and/or colour value is assigned to the pixels (BPS1) of the first image segment (BS1) (201),
   - wherein the brightness values and/or colour values are extrapolated to pixels (BPS2) of a second image segment (BS2) of any shape (202),
   - wherein extrapolation takes place in such a way that a signal curve of the brightness values and/or colour values of the pixels (BPS2) of the second image segment (BS2) is smoothed (203),
   - wherein extrapolation takes place in such a way that the brightness values and/or colour values of the pixels (BPS2) of the second image segment (BS2) are matched in the signal curve to the brightness values and/or colour values of the pixels (BPS1) of the first image segment (BS1) in a boundary region (GB) between the first image segment (BS1) and second image segment (BS2) (204) and
   - wherein the brightness values and/or colour values of the pixels (BPS2) of the second image segment (BS2) are initialised at the start of the method with a pre-definable value, **characterised in that** the initialised pixels are used for extrapolation, with the pre-definable value resulting from one mean of the brightness values and/or colour values of the pixels (BPS1) of the first image segment (BS1).

2. Method according to Claim 1
   wherein a digital filter with a smoothing characteristic is employed for extrapolation.

3. Method according to Claim 1 or 2
   wherein extrapolation of the brightness values and/or colour values of the pixels (BPS2) of the second image segment (BS2) takes place proceeding from pixels (BPS2) of the second image segment (BS2), which are adjacent to the pixels (BPS1) of the first image segment (BS1).

4. Method according to Claim 2 or 3
   wherein a local averaging filter is employed as the digital filter.

5. Method according to Claim 2 or 3
   wherein a median filter is employed as the digital filter.

6. Method according to one of the Claims 1 to 5
   wherein the method is carried out several times.

7. Method according to Claim 6
   wherein the method continues being carried out until, after an iteration, a sum of changes in at least a part of the brightness values and/or colour values of the pixels (BPS2) of the second image segment (BS2) is less compared to at least one preceding iteration than a pre-definable first threshold value (SW1).

8. Method according to Claim 6
   wherein the method continues being carried out until, after an iteration, a mean of changes in at least a part of the brightness values and/or colour values of the pixels (BPS2) of the second image segment (BS2) is less compared to at least one preceding iteration than a pre-definable second threshold value (SW2).

9. Method according to Claim 6
   wherein the method continues being carried out until, after an iteration, changes in at least a part of the brightness values and/or colour values of the pixels (BPS2) of the second image segment (BS2) is less compared to at least one preceding iteration than a pre-definable third threshold value (SW3).

10. Method according to Claim 1

    - wherein, for extrapolation, a first function (F1) is formed having at least a first term and a second term,
    - wherein it is ensured by means of the first term that the signal curve of the brightness values and/or colour values of the pixels (BPS1) of the first image segment (BS1) is as far as possible retained,

- wherein it is ensured by means of the second term that the signal curve of the brightness values and/or colour values of the pixels (BPS2) of the second image segment (BS2) is smoothed and
- wherein it is ensured by means of the second term that the signal curve of the brightness values and/or colour values of the pixels (BPS2) of the second image segment (BS2) is matched to the brightness values and/or colour values of the pixels (BPS1) of the first image segment (BS1) in a boundary region (GB) between the first image segment (BS1) and the second image segments (BS2).

11. Method according to Claim 10
wherein the first term is determined from a difference in the signal curve ($f(x_{ij})$) of the brightness values and/or colour values of the pixels (BPS1) of the first image segment (BS1) and a signal curve ($g(x_{ij})$) augmented to the brightness values and/or colour values of the pixels (BPS2) of the second image segment (BS2).

12. Method according to Claim 10 or 11
wherein the second term is the result at least of one arbitrary differentiation of a signal curve ($g(x_{ij})$) augmented to the brightness values and/or colour values of the pixels (BPS2) of the second image segment (BS2).

13. Method according to Claim 12
wherein the second term is the result at least of a second differentiation of the signal curve ($g(x_{ij})$) augmented to the brightness values and/or colour values of the pixels (BPS2) of the second image segment (BS2).

14. Method according to one of the Claims 10 to 13

- wherein the augmented signal curve ($g(x_{ij})$) is transformed into the spectral range, with the transformed augmented signal curve ($g(x_{ij})$) having spectral coefficients,
- wherein an intermediate function is formed by inserting the transformed augmented signal curve ($g(x_{ij})$) into the first function (F1),
- wherein a linear equational system is formed by differentiating the intermediate function in accordance with the respective spectral coefficients and zeroing it,
- wherein values of the spectral coefficients are determined by solving the linear equational system in accordance with the spectral coefficients.

15. Method according to one of the Claims 1 to 14
wherein integer mathematics are employed in the method.

16. Method according to one of the Claims 1 to 15
wherein the first image segment (BS1) and second image segment (BS2) are together square in shape.

17. Method according to one of the Claims 1 to 16 employed within the scope of transformation coding.

18. Method according to one of the Claims 1 to 16 employed within the scope of discrete cosine transformation (DCT).

19. Method according to one of the Claims 1 to 16 employed within the scope of wavelet transformation.

20. Method according to one of the Claims 1 to 16 employed within the scope of sub-band transformation.

21. Device for processing pixels (BPS1) of a first image segment (BS1) of any shape
with a computing unit set up such that

- a brightness value and/or colour value is assigned to the pixels (BPS1) of the first image segment (BS1) (201),
- the brightness values and/or colour values are extrapolated to pixels (BPS2) of a second image segment (BS2) of any shape (202),
- extrapolation takes place in such a way that a signal curve of the brightness values and/or colour values of the pixels (BPS2) of the second image segment (BS2) is smoothed (203), and
- extrapolation takes place in such a way that the brightness values and/or colour values of the pixels (BPS2) of the second image segment (BS2) are matched in the signal curve to the brightness values and/or colour values of the pixels (BPS1) of the first image segment (BS1) in a boundary region (GB) between the first image segment (BS1) and second image segment (BS2) (204) and

- the brightness values and/or colour values of the pixels (BPS2) of the second image segment (BS2) are initialised at the start of the method with a pre-definable value, **characterised in that** the initialised pixels are used for extrapolation, with the pre-definable value resulting from one mean of the brightness values and/or colour values of the pixels (BPS1) of the first image segment (BS1).

**22.** Device according to Claim 21
wherein the computing unit is set up such that a digital filter with a smoothing characteristic is employed for extrapolation.

**23.** Device according to Claim 21 or 22
wherein the computing unit is set up such that extrapolation of the brightness values and/or colour values of the pixels (BPS2) of the second image segment (BS2) takes place proceeding from pixels (BPS2) of the second image segment (BS2), which are adjacent to the pixels (BPS1) of the first image segment (BS1).

**24.** Device according to Claim 22 or 23
wherein the computing unit is set up such that a local averaging filter is employed as the digital filter.

**25.** Device according to Claim 22 or 23
wherein the computing unit is set up such that a median filter is employed as the digital filter.

**26.** Device according to Claim 21
wherein the computing unit is set up such that

- for extrapolation, a first function (F1) is formed having at least a first term and a second term,
- it is ensured by means of the first term that the signal curve of the brightness values and/or colour values of the pixels (BPS1) of the first image segment (BS1) is as far as possible retained,
- it is ensured by means of the second term that the signal curve of the brightness values and/or colour values of the pixels (BPS2) of the second image segment (BS2) is smoothed and
- it is ensured by means of the second term that the signal curve of the brightness values and/or colour values of the pixels (BPS2) of the second image segment (BS2) is matched to the brightness values and/or colour values of the pixels (BPS1) of the first image segment (BS1) in a boundary region (GB) between the first image segment (BS1) and the second image segments (BS2).

**27.** Device according to Claim 26
wherein the computing unit is set up such that the first term is determined from a difference between signal curve ($f(x_{ij})$) of the brightness values and/or colour values of the pixels (BPS1) of the first image segment (BS1) and a signal curve ($g(x_{ij})$) augmented to the brightness values and/or colour values of the pixels (BPS2) of the second image segment (BS2).

**28.** Device according to Claim 26 or 27
wherein the computing unit is set up such that the second term is the result at least of one arbitrary differentiation of a signal curve ($g(x_{ij})$) augmented to the brightness values and/or colour values of the pixels (BPS2) of the second image segment (BS2).

**29.** Device according to Claim 28
wherein the computing unit is set up such that the second term is the result at least of a second differentiation of the signal curve ($g(x_{ij})$) augmented to the brightness values and/or colour values of the pixels (BPS2) of the second image segment (BS2).

**30.** Device according to one of the Claims 26 to 29
wherein the computing unit is set up such that

- the augmented signal curve ($g(x_{ij})$) is transformed into the spectral range, with the transformed augmented signal curve ($g(x_{ij})$) having spectral coefficients,
- an intermediate function is formed by inserting the transformed augmented signal curve ($g(x_{ij})$) into the first function (F1),
- a linear equational system is formed by differentiating the intermediate function in accordance with the respective spectral coefficients and zeroing it,

- values of the spectral coefficients are determined by solving the linear equational system in accordance with the spectral coefficients.

**31.** Device according to one of the Claims 21 to 30
wherein the computing unit is set up such that integer mathematics are employed in the method.

**32.** Device according to one of the Claims 21 to 31
wherein the computing unit is set up such that the first image segment (BS1) and second image segment (BS2) are together square in shape.

**33.** Device according to one of the Claims 21 to 32 employed within the scope of transformation coding.

**34.** Device according to one of the Claims 21 to 32 employed within the scope of discrete cosine transformation (DCT).

**35.** Device according to one of the Claims 21 to 32 employed within the scope of wavelet transformation.

**36.** Device according to one of the Claims 21 to 32 employed within the scope of sub-band transformation.


**Revendications**

**1.** Procédé destiné au traitement par un ordinateur de points d'image (BPS1) d'un premier segment d'image (BS1), qui a n'importe quelle forme,

- dans lequel une valeur de luminosité et/ou une valeur chromatique est affectée (201) aux points d'image (BPS1) du premier segment d'image (BS1),
- dans lequel les valeurs de luminosité et/ou les valeurs chromatiques sont extrapolées (202) sur des points d'image (BPS2) d'un deuxième segment d'image (BS2) qui a n'importe quelle forme,
- dans lequel l'extrapolation se fait de telle manière qu'une courbe du signal des valeurs de luminosité et/ou des valeurs chromatiques des points d'image (BPS2) du deuxième segment d'image (BS2) est lissée (203) et
- dans lequel l'extrapolation se fait de telle manière que, dans la courbe du signal, les valeurs de luminosité et/ou les valeurs chromatiques des points d'image (BPS2) du deuxième segment d'image (BS2) sont alignées (204) sur les valeurs de luminosité et/ou les valeurs chromatiques des points d'image (BPS1) du premier segment d'image (BS1 ) dans une zone limitrophe (GB) entre le premier segment d'image (BS1) et le deuxième segment d'image (BS2),
- dans lequel les valeurs de luminosité et/ou les valeurs chromatiques des points d'image (BPS2) du deuxième segment d'image (BS2) sont initialisées, au début du procédé, sur une valeur qui peut être prédéterminée

**caractérisé par le fait que**
les points d'image initialisés sont utilisés pour l'extrapolation, la valeur qui peut être prédéterminée découlant de la valeur moyenne des valeurs de luminosité et/ou des valeurs chromatiques des points d'image (BPS1) du premier segment d'image (BS1).

**2.** Procédé selon la revendication 1
dans lequel, pour l'extrapolation, on utilise un filtre numérique ayant une caractéristique lissante.

**3.** Procédé selon la revendication 1 ou 2
dans lequel l'extrapolation des valeurs de luminosité et/ou des valeurs chromatiques des points d'image (BPS2) du deuxième segment d'image (BS2) se fait en partant des points d'image (BPS2) du deuxième segment d'image (BS2) qui sont voisins des points d'image (BPS1) du premier segment d'image (BS1).

**4.** Procédé selon la revendication 2 ou 3
dans lequel on utilise un filtre local à valeur moyenne en tant que filtre numérique.

**5.** Procédé selon la revendication 2 ou 3
dans lequel on utilise un filtre médian en tant que filtre numérique.

**6.** Procédé selon l'une des revendications 1 à 5

dans lequel le procédé est exécuté plusieurs fois.

**7.** Procédé selon la revendication 6
dans lequel le procédé est exécuté tant que, après une itération, une somme de variations de au moins une partie des valeurs de luminosité et/ou des valeurs chromatiques des points d'image (BPS2) du deuxième segment d'image (BS2) par comparaison avec au moins une itération précédente est inférieure à une première valeur seuil (SW1), qui peut être prédéterminée.

**8.** Procédé selon la revendication 6
dans lequel le procédé est exécuté tant que, après une itération, une valeur moyenne de variations de au moins une partie des valeurs de luminosité et/ou des valeurs chromatiques des points d'image (BPS2) du deuxième segment d'image (BS2) par comparaison avec au moins une itération précédente est inférieure à une deuxième valeur seuil (SW2), qui peut être prédéterminée.

**9.** Procédé selon la revendication 6
dans lequel le procédé est exécuté tant que, après une itération, la variation de au moins une partie des valeurs de luminosité et/ou des valeurs chromatiques des points d'image (BPS2) du deuxième segment d'image (BS2) par comparaison avec au moins une itération précédente est inférieure à une troisième valeur seuil (SW3), qui peut être prédéterminée.

**10.** Procédé selon la revendication 1

- dans lequel on forme, pour l'extrapolation, une première fonction (F1) qui comporte au moins un premier terme et un deuxième terme,
- dans lequel, avec le premier terme, on garantit que la courbe du signal des valeurs de luminosité et/ou des valeurs chromatiques des points d'image (BPS1) du premier segment d'image (BS1) est autant que possible conservée,
- dans lequel, avec le deuxième terme, on garantit que la courbe du signal des valeurs de luminosité et/ou des valeurs chromatiques des points d'image (BPS2) du deuxième segment d'image (BS2) est lissée et
- dans lequel, avec le deuxième terme, on garantit que la courbe du signal des valeurs de luminosité et/ou des valeurs chromatiques des points d'image (BPS2) du deuxième segment d'image (BS2) est alignée sur les valeurs de luminosité et/ou les valeurs chromatiques des points d'image (BPS1) du premier segment d'image (BS1) dans une zone limitrophe (GB) entre le premier segment d'image (BS1) et le deuxième segment d'image (BS2).

**11.** Procédé selon la revendication 10
dans lequel le premier terme est déterminé à partir d'une différence entre la loi du signal ($f(x_{ij})$) des valeurs de luminosité et/ou des valeurs chromatiques des points d'image (BPS1) du premier segment d'image (BS1) et une loi du signal ($g(x_{ij})$) complétée sur les valeurs de luminosité et/ou les valeurs chromatiques des points d'image (BPS2) du deuxième segment d'image (BS2).

**12.** Procédé selon la revendication 10 ou 11
dans lequel le deuxième terme découle au moins d'une différenciation quelconque d'une loi du signal ($g(x_{ij})$) complétée sur les valeurs de luminosité et/ou les valeurs chromatiques des points d'image (BPS2) du deuxième segment d'image (BS2).

**13.** Procédé selon la revendication 12
dans lequel le deuxième terme découle au moins d'une deuxième différenciation de la loi du signal ($g(x_{ij})$) complétée sur les valeurs de luminosité et/ou les valeurs chromatiques des points d'image (BPS2) du deuxième segment d'image (BS2).

**14.** Procédé selon l'une des revendications 10 à 13

- dans lequel la loi du signal complétée ($g(x_{ij})$) est transformée dans le domaine spectral, la loi du signal ($g(x_{ij})$) complétée et transformée comportant des coefficients spectraux,
- dans lequel on forme une fonction intermédiaire en insérant la loi du signal ($g(x_{ij})$) complétée et transformée dans la première fonction (F1),
- dans lequel on forme un système d'équations linéaires en faisant la différenciation de la fonction intermédiaire selon les coefficients spectraux respectifs et en l'assignant égale à zéro,

- dans lequel on détermine des valeurs des coefficients spectraux en résolvant le système d'équations linéaires selon les coefficients spectraux.

**15.** Procédé selon l'une des revendications 1 à 14
dans lequel on utilise pour le procédé une arithmétique des nombres entiers.

**16.** Procédé selon l'une des revendications 1 à 15
dans lequel le premier segment d'image (BS1) et le deuxième segment d'image (BS2) ont ensemble une forme carrée.

**17.** Procédé selon l'une des revendications 1 à 16 qui est mis en oeuvre dans le cadre d'un codage par transformation.

**18.** Procédé selon l'une des revendications 1 à 16 qui est mis en oeuvre dans le cadre d'une transformation discrète en cosinus (DCT).

**19.** Procédé selon l'une des revendications 1 à 16 qui est mis en oeuvre dans le cadre d'une transformation en ondelettes (ou "wavelet-transformation", en anglais).

**20.** Procédé selon l'une des revendications 1 à 16 qui est mis en oeuvre dans le cadre d'une transformation par bande partielle.

**21.** Dispositif destiné au traitement de points d'image (BPS1) d'un premier segment d'image (BS1), qui a n'importe quelle forme, comportant une unité d'ordinateur conçue de telle sorte que

- une valeur de luminosité et/ou une valeur chromatique est affectée (201) aux points d'image (BPS1) du premier segment d'image (BS1),
- les valeurs de luminosité et/ou les valeurs chromatiques sont extrapolées (202) sur des points d'image (BPS2) d'un deuxième segment d'image (BS2) qui a n'importe quelle forme,
- l'extrapolation se fait de telle manière qu'une courbe du signal des valeurs de luminosité et / ou des valeurs chromatiques des points d'image (BPS2) du deuxième segment d'image (BS2) est lissée (203) et
- l'extrapolation se fait de telle manière que, dans la courbe du signal, les valeurs de luminosité et/ou les valeurs chromatiques des points d'image (BPS2) du deuxième segment d'image (BS2) sont alignées (204) sur les valeurs de luminosité et/ou les valeurs chromatiques des points d'image (BPS1) du premier segment d'image (BS1) dans une zone limitrophe (GB) entre le premier segment d'image (BS1) et le deuxième segment d'image (BS2),
- les valeurs de luminosité et/ou les valeurs chromatiques des points d'image (BPS2) du deuxième segment d'image (BS2) sont initialisées, au début du procédé, sur une valeur qui peut être prédéterminée

**caractérisé par le fait que**
les points d'image initialisés sont utilisés pour l'extrapolation, la valeur qui peut être prédéterminée découlant de la valeur moyenne des valeurs de luminosité et/ou des valeurs chromatiques des points d'image (BPS1) du premier segment d'image (BS1).

**22.** Dispositif selon la revendication 21
dans lequel l'unité d'ordinateur est conçue de telle sorte que, pour l'extrapolation, on utilise un filtre numérique ayant une caractéristique lissante.

**23.** Dispositif selon la revendication 21 ou 22
dans lequel l'unité d'ordinateur est conçue de telle sorte que l'extrapolation des valeurs de luminosité et/ou des valeurs chromatiques des points d'image (BPS2) du deuxième segment d'image (BS2) se fait en partant de points d'image (BPS2) du deuxième segment d'image (BS2) qui sont voisins des points d'image (BPS1) du premier segment d'image (BS1).

**24.** Dispositif selon la revendication 22 ou 23
dans lequel l'unité d'ordinateur est conçue de telle sorte qu'on utilise un filtre local à valeur moyenne en tant que filtre numérique.

**25.** Dispositif selon la revendication 22 ou 23
dans lequel l'unité d'ordinateur est conçue de telle sorte qu'on utilise un filtre médian en tant que filtre numérique.

**26.** Dispositif selon la revendication 21
dans lequel l'unité d'ordinateur est conçue de telle sorte que

- pour l'extrapolation, on forme une première fonction (F1) qui comporte au moins un premier terme et un deuxième terme,
- avec le premier terme, on garantit que la courbe du signal des valeurs de luminosité et/ou des valeurs chromatiques des points d'image (BPS1) du premier segment d'image (BS1) est autant que possible conservée,
- avec le deuxième terme, on garantit que la courbe du signal des valeurs de luminosité et / ou des valeurs chromatiques des points d'image (BPS2) du deuxième segment d'image (BS2) est lissée et
- avec le deuxième terme, on garantit que la courbe du signal des valeurs de luminosité et / ou des valeurs chromatiques des points d'image (BPS2) du deuxième segment d'image (BS2) est alignée sur les valeurs de luminosité et/ou les valeurs chromatiques des points d'image (BPS1) du premier segment d'image (BS1) dans une zone limitrophe (GB) entre le premier segment d'image (BS1) et le deuxième segment d'image (BS2).

**27.** Dispositif selon la revendication 26
dans lequel l'unité d'ordinateur est conçue de telle sorte que le premier terme est déterminé à partir d'une différence entre la loi du signal ($f(x_{ij})$) des valeurs de luminosité et/ou des valeurs chromatiques des points d'image (BPS1) du premier segment d'image (BS1) et une loi du signal ($g(x_{ij})$) complétée sur les valeurs de luminosité et/ou les valeurs chromatiques des points d'image (BPS2) du deuxième segment d'image (BS2).

**28.** Dispositif selon la revendication 26 ou 27
dans lequel l'unité d'ordinateur est conçue de telle sorte que le deuxième terme découle au moins d'une différenciation quelconque d'une loi du signal ($g(x_{ij})$) complétée sur les valeurs de luminosité et/ou les valeurs chromatiques des points d'image (BPS2) du deuxième segment d'image (BS2).

**29.** Dispositif selon la revendication 28
dans lequel l'unité d'ordinateur est conçue de telle sorte que le deuxième terme découle au moins d'une deuxième différenciation d'une loi du signal ($g(x_{ij})$) complétée sur les valeurs de luminosité et/ou les valeurs chromatiques des points d'image (BPS2) du deuxième segment d'image (BS2).

**30.** Dispositif selon l'une des revendications 26 à 29
dans lequel l'unité d'ordinateur est conçue de telle sorte que

- la loi du signal ($g(x_{ij})$) complétée est transformée dans le domaine spectral, la loi du signal ($g(x_{ij})$) complétée et transformée comportant des coefficients spectraux,
- une fonction intermédiaire est formée en insérant la loi du signal ($g(x_{ij})$) complétée et transformée dans la première fonction (F1),
- un système d'équations linéaires est formé en faisant la différenciation de la fonction intermédiaire selon les coefficients spectraux respectifs et en l'assignant égale à zéro,
- des valeurs des coefficients spectraux sont déterminées en résolvant le système d'équations linéaires selon les coefficients spectraux.

**31.** Dispositif selon l'une des revendications 21 à 30
dans lequel l'unité d'ordinateur est conçue de telle sorte qu'on utilise pour le procédé une arithmétique des nombres entiers.

**32.** Dispositif selon l'une des revendications 21 à 31
dans lequel l'unité d'ordinateur est conçue de telle sorte que le premier segment d'image (BS1) et le deuxième segment d'image (BS2) ont ensemble une forme carrée.

**33.** Dispositif selon l'une des revendications 21 à 32 mis en oeuvre dans le cadre d'un codage par transformation.

**34.** Dispositif selon l'une des revendications 21 à 32 mis en oeuvre dans le cadre d'une transformation discrète en cosinus (DCT).

**35.** Dispositif selon l'une des revendications 21 à 32 mis en oeuvre dans le cadre d'une transformation en ondelettes (ou "wavelet-transformation", en anglais).

**36.** Dispositif selon l'une des revendications 21 à 32 mis en oeuvre dans le cadre d'une transformation par bande partielle.

# FIG 1

# FIG 2

201

Zuordnen von Helligkeitswerten und/
oder Farbwerten zu Bildpunkten

202

Signalextrapolation der Helligkeitswerte und/oder
Farbwerte eines ersten Bildsegments auf
Helligkeitswerte und/oder Farbwerte eines zweiten
Bildsegments, wobei

203

bei der Signalextrapolation der Signalverlauf
der Helligkeitswerte und/oder Farbwerte in
dem zweiten Bildsegment geglättet wird, und

204

bei der Signalextrapolation der Signalverlauf
der Helligkeitswerte und/oder Farbwerte in
einem Grenzbereich des ersten Bildsegments
und des zweiten Bildsegments keine
Sprungstellen aufweist

# FIG 3

┌─────────────────────────────────────────────────────────────┐  ⌐ 301
│  Für mindestens einen Teil der Bildpunkte des zweiten        │
│                      Bildsegments                            │
│   ┌───────────────────────────────────────────────────┐     │
│   │  Ermittlung eines neuen Helligkeitswerts für den   │     │ ⌐ 302
│   │      Bildpunkt des zweiten Bildsegments            │     │
│   ├───────────────────────────────────────────────────┤     │
│   │  Zuordnung des neuen Helligkeitswerts zu dem       │     │ ⌐ 303
│   │      Bildpunkt des zweiten Bildsegments            │     │
│   └───────────────────────────────────────────────────┘     │
└─────────────────────────────────────────────────────────────┘

# FIG 4

```
┌─────────────────────────────────────┐
│  Eine erste Funktion enthält eine    │  ─── 401
│  Summe eines ersten Terms und        │
│  eines zweiten Terms                 │
└─────────────────────────────────────┘
                  │
                  ▼
┌─────────────────────────────────────┐
│  Ein ergänzter Signalverlauf wird    │  ─── 402
│  in Spektraldarstellung in die       │
│  erste Funktion eingesetzt           │
└─────────────────────────────────────┘
                  │
                  ▼
┌─────────────────────────────────────┐
│  Erste Funktion wird nach den        │  ─── 403
│  gesuchten Spektralkoeffizienten     │
│  differenziert                       │
└─────────────────────────────────────┘
                  │
                  ▼
┌─────────────────────────────────────┐
│  Entstehendes lineares               │  ─── 404
│  Gleichungssystem wird gleich Null   │
│  gesetzt und gelöst                  │
└─────────────────────────────────────┘
```

**FIG 5a**

BPS2     GB

| | | | | | | | |
|---|---|---|---|---|---|---|---|
| + | + | + | + | + | + | + | + |
| + | + | + | + | + | + | 130 | 129 |
| + | + | + | + | 129 | 133 | 127 | 124 |
| + | + | + | + | 126 | 131 | 122 | 125 |
| + | + | + | 104 | 130 | 122 | 124 | 123 |
| + | + | + | 108 | 128 | 117 | 117 | 112 |
| + | + | + | 123 | 121 | 114 | 112 | 109 |
| + | + | + | 132 | 114 | 116 | 113 | 112 |

BPS1

B

**FIG 5b**

BPS2     GB

| | | | | | | | |
|---|---|---|---|---|---|---|---|
| 120 | 120 | 120 | 121 | 123 | 125 | 126 | 125 |
| 121 | 120 | 120 | 122 | 125 | 128 | 130 | 129 |
| 122 | 120 | 120 | 122 | 129 | 133 | 127 | 124 |
| 121 | 120 | 119 | 118 | 126 | 131 | 122 | 125 |
| 121 | 119 | 115 | 104 | 130 | 122 | 124 | 123 |
| 120 | 119 | 116 | 108 | 128 | 117 | 117 | 112 |
| 117 | 119 | 120 | 123 | 121 | 114 | 112 | 109 |
| 115 | 119 | 123 | 132 | 114 | 116 | 113 | 112 |

BPS1

B

**FIG 5c**

BPS2     GB

| | | | | | | | |
|---|---|---|---|---|---|---|---|
| 120 | 121 | 122 | 125 | 128 | 129 | 130 | 129 |
| 119 | 121 | 121 | 124 | 128 | 130 | 130 | 129 |
| 118 | 118 | 119 | 122 | 129 | 133 | 127 | 124 |
| 117 | 117 | 115 | 116 | 126 | 131 | 122 | 125 |
| 116 | 115 | 109 | 104 | 130 | 122 | 124 | 123 |
| 117 | 116 | 112 | 108 | 128 | 117 | 117 | 112 |
| 118 | 119 | 120 | 123 | 121 | 114 | 112 | 108 |
| 120 | 121 | 127 | 132 | 114 | 116 | 114 | 112 |

BPS1

B

# FIG 6